# FASCICULE DE BREVET EUROPEEN

(11) **EP 2 470 299 B1**
(45) Date de publication et mention de la délivrance du brevet: **09.07.2014**
(21) Numéro de dépôt: 10763739.9
(22) Date de dépôt: 24.08.2010
(51) Int. Cl.: B01J 23/44, B01J 23/89, B01J 37/16, B01D 53/86

(54) **CATALYSEUR POUR LE TRAITEMENT PHOTOCALYTIQUE DE MILIEUX GAZEUX COMPRENANT DU MONOXYDE DE CARBONE**
KATALYSATOR ZUR FOTOKATALYTISCHEN BEHANDLUNG VON GASFÖRMIGEN MEDIEN MIT KOHLENSTOFFMONOXID
CATALYST FOR THE PHOTOCALYTIC TREATMENT OF GASEOUS MEDIA INCLUDING CARBON MONOXIDE

(30) Priorité: 24.08.2009 FR 0955755
(43) Date de publication de la demande: 04.07.2012
(73) Titulaire: Centre National de la Recherche Scientifique (CNRS), 75016 Paris (FR)
(72) Inventeur: ROSSELER, Olivier, F-67000 Strasbourg (FR); LOUVET, Alain, F-91220 Brétigny Sur Orge (FR); KELLER, Nicolas, F-67200 Strasbourg (FR); KELLER-SPITZER, Valérie, F-67203 Oberschaeffolsheim (FR)
(74) Mandataire: Blot, Philippe Robert Emile
(86) Numéro de dépôt international: PCT/FR2010/051761
(87) Numéro de publication internationale: WO 2011/023897

(56) Documents cités:
- JP-A- 10 296 082
- JP-A- 2000 317 269
- JP-A- 2003 210 984
- US-A1- 2007 092 768
- JAMES LULIZI ALUHA ET AL: "Palladium-Based Catalysts with Improved Sulphur Tolerance for Diesel-Engine Exhaust Systems", TOPICS IN CATALYSIS, KLUWER ACADEMIC PUBLISHERS-PLENUM PUBLISHERS, NE LNKD- DOI:10.1007/S11244-009-9373-3, vol. 52, no. 13-20, 16 juillet 2009 (2009-07-16), pages 1977-1982, XP019753974, ISSN: 1572-9028

## Description

La présente invention a trait au domaine de la purification de milieux gazeux pollués par des gaz ou des aérosols, en particulier de milieux gazeux contenant du monoxyde de carbone (CO).

L'invention concerne plus spécifiquement une technique de dépollution par oxydation photocatalytique, qui permet de traiter des milieux gazeux pollués à la fois par du CO et par d'autres polluants gazeux ou aérosols tels que des composés organiques volatils (dits "*COVs*"). Cette technique de dépollution, utilisable y compris en présence d'humidité et à température ambiante, se révèle en particulier adaptée pour réaliser un traitement multi-polluants de l'air présent dans des environnements confinés, en particulier l'air présent dans des bâtiments ou des véhicules habités (dit "air *indoor*"), qui comprennent le plus souvent du CO et des *COVs* à titre de polluants.

On connaît à ce jour des procédés de traitement de milieux gazeux contenant des polluants de type CO et composés organiques volatils, qui ne s'avèrent cependant pas adaptés au traitement spécifique d'atmosphères confinées habitées du type précité.

Concernant le traitement de milieux gazeux comprenant du monoxyde de carbone, il a notamment été décrit des méthodes où le CO est converti thermiquement en CO₂ en présence d'un catalyseur à base d'un métal noble, généralement de l'or. Ces méthodes, surtout destinées au traitement de flux gazeux industriels ou de flux d'échappement d'automobiles, ne sont pas adaptées au traitement de l'air intérieur d'une pièce ou d'un véhicule habité. En effet, elles nécessitent de porter le milieu gazeux à traiter à des températures élevées (typiquement supérieures à 80°C, en général de l'ordre de 100 à 500°C). En outre, elles présentent l'inconvénient de mettre en oeuvre des catalyseurs contenant une quantité non négligeable de métal précieux, ce qui se traduit en termes de coût relativement prohibitif.

Pour ce qui est du traitement des polluants organiques présents en milieu gazeux, il existe des dispositifs commerciaux destinés à l'élimination à température ambiante de ce type de polluants organiques présents dans de l'air intérieur d'environnements confinés, notamment habités. Ces dispositifs mettent typiquement en oeuvre un photocatalyseur à base d'oxyde de titane (TiO₂) pour réaliser une oxydation photocatalytique des polluants organiques au contact du photocatalyseur en présence de l'oxygène de l'air. Cette oxydation photocatalytique présente, entre autres, l'avantage de pouvoir être conduite à température ambiante et éventuellement en présence d'humidité, ce qui autorise le traitement direct de l'air présent dans l'environnement confiné à assainir.

Dans les dispositifs de ce type, l'oxyde de titane est photoactivé par irradiation par des photons d'énergie supérieure ou égale à l'énergie nécessaire pour promouvoir les électrons de sa bande de valence vers sa bande de conduction (typiquement un rayonnement comprenant des longueurs d'ondes inférieures à 380 nm (UVA), et/ou des rayonnement visibles dans le cas de la présence d'oxyde de titane de forme rutile). Les polluants organiques qui entrent en contact avec l'oxyde de titane ainsi photoactivé sont oxydés photocatalytiquement, ce qui conduit typiquement à une conversion des polluants organiques en des composés minéraux moins nocifs tels que CO₂, H₂O (ou bien des espèces minérales type sulfates ou nitrates dans le cas où les polluants organiques de départ sont respectivement soufrés ou azotés).

Les dispositifs d'élimination de polluants organiques utilisant du TiO₂ photoactivé du type précité sont certes potentiellement efficaces pour le traitement d'une large gamme de polluants. Toutefois, en dépit de ces avantages, ils ne s'avèrent pas pleinement satisfaisants pour le traitement d'atmosphères confinées. En effet, ils ne permettent pas un traitement parallèle du monoxyde de carbone, qui est pourtant considéré aujourd'hui comme l'un des polluants toxiques problématiques de premier ordre présent dans des environnements confinés.

Plus précisément, les catalyseurs utilisant du TiO₂ photoactivé du type précité ne permettent pas une conversion efficace de CO en CO₂, et ce d'autant plus que la teneur en humidité est élevée dans le flux gazeux à traiter. Dès lors, les dispositifs de purification actuellement connus qui utilisent du TiO₂ photoactivé, ne s'avèrent pas adaptés à un traitement concret d'environnement confinés habités qui contiennent généralement de l'humidité et du monoxyde de carbone.

Le document JP2003210984 décrit un catalyseur composite destiné au traitement de gaz, qui ne présente pas seulement des propriétés désodorisantes et des propriétés antibactériennes, mais permet aussi d'éliminer le CO, même dans un milieu humide. Ce catalyseur composite comprend un photocatalyseur constitué de TiO₂ porteur d'au moins un élément de la famille du platine.

D'autres photocatalyseurs comprenant un élément de la famille du platine sont connus des documents JP2000317269 et JP10296082.

Le document US2007/0092768 décrit l'oxydation sélective du CO dans un flux d'hydrogène, utilisant un catalyseur bimétallique déposé sur un support d'alumine.

Un but de la présente invention est de fournir une nouvelle méthode permettant de purifier efficacement un milieu gazeux comprenant du monoxyde de carbone, et ce dès la température ambiante et y compris en présence d'humidité.

Plus spécifiquement, l'invention se fixe pour but de pouvoir traiter globalement et efficacement un milieu gazeux comprenant à la fois du monoxyde de carbone et des polluants organiques. Dans ce cadre, l'invention se fixe notamment pour objectif de fournir un moyen de traiter efficacement, et de façon globale, des atmosphères intérieures d'environnements confinés, tels que l'air intérieur de bâtiments ou de véhicules.

Pour atteindre ces objectifs, la présente invention propose d'employer un type de composition photocatalytique, dont les inventeurs ont maintenant mis en évidence qu'il permet, à lui seul, de convertir efficacement, par oxydation photocatalytique, à la fois le monoxyde de carbone et les polluants organiques dans un milieu gazeux comprenant ces polluants en mélange.

Plus précisément, la présente invention emploie une composition catalytique (C) qui comprend :
- un support comprenant, au moins en surface, de l'oxyde de titane ; et
- déposé sur l'oxyde de titane présent sur la surface du support, un mélange métallique contenant :
- du platine (Pt) au moins en partie à l'état métallique ; et
- du palladium (Pd) et/ou du nickel (Ni), au moins en partie à l'état métallique.
Les travaux qui ont été conduits par les inventeurs dans le cadre de la présente invention ont maintenant permis de mettre en évidence qu'une composition catalytique (C) telle que définie ci-dessus peut être employée efficacement pour réaliser une oxydation photocatalytique de monoxyde de carbone contenu dans un milieu gazeux. Cette utilisation spécifique des compositions catalytiques (C), qui conduit généralement à une conversion quantitative du monoxyde de carbone en CO₂, constitue un objet particulier de la présente invention, ainsi que les compositions catalytiques (C) du type précité qui sont spécifiquement destinées à effectuer une oxydation photocatalytique de monoxyde de carbone contenu dans un milieu gazeux.

Les inventeurs ont maintenant établi que, lorsqu'on met en contact du CO en présence d'oxygène avec la composition catalytique (C) à l'état photoactivé (à savoir irradiée par des photons d'énergie supérieure ou égale à l'énergie nécessaire pour promouvoir les électrons de la bande de valence du TiO₂ vers la bande de conduction, typiquement par un rayonnement comprenant des longueurs d'ondes inférieures à 380 nm), on observe un conversion particulièrement efficace et quantitative du CO en CO₂. Les inventeurs ont de plus remarqué, dans le cadre de la présente invention, que la conversion du CO au moyen d'une composition (C) du type précité peut être réalisée à température ambiante et sous pression atmosphérique, et ce en présence ou non d'humidité.

En outre, les inventeurs ont maintenant mis en lumière qu'une composition catalytique (C) permet de réaliser une oxydation photocatalytique efficace de composés organiques de type *COVs,* et que, de façon inattendue par rapport aux propriétés connues des catalyseurs à base de TiO2 des dispositifs de purification d'air actuels, cette efficacité est maintenue lorsque le milieu traité contient du monoxyde de carbone, et ce y compris en présence d'humidité.

En d'autres termes, contre toute attente, les inventeurs ont maintenant mis en évidence une composition photocatalytique qui permet un traitement global et efficace d'atmosphères comprenant à la fois du monoxyde de carbone et des polluants organiques, et ce dès la température ambiante, et même en présence d'humidité.

En outre, de façon encore plus surprenante, il s'avère que les propriétés catalytiques particulièrement intéressantes des compositions employées selon l'invention sont obtenues y compris avec des quantités relativement faibles de métaux déposés sur la surface du support. En effet, des effets plus que notables sont observés avec des quantités de métaux ajoutés de l'ordre de quelques 0,1 % en masse par rapport à la masse totale du catalyseur, (ce qui représente de l'ordre d'au moins 10 fois moins que les quantités de métaux nobles requises dans les catalyseurs de traitement thermique du CO décrits plus haut dans la présente description). Dès lors, quand bien même les compositions employées selon l'invention comprennent des métaux relativement onéreux (Pt et Pd en particulier), ces derniers sont présents en des quantités suffisamment faibles pour ne pas affecter de façon trop conséquente le coût des compositions catalytiques employées selon l'invention et à ne pas constituer un frein à leur exploitation concrète.

Ces propriétés particulièrement intéressantes des compositions (C), qui ont été mises en évidence dans le cadre de la présente invention, ouvrent la voie à un traitement global et efficace de l'air intérieur d'environnements confinés par voie photocatalytique, qui demeurait pour l'heure inenvisageable au vu des photocatalyseurs actuellement connus.

Dans ce cadre, selon un aspect spécifique, l'invention a également pour objet un procédé de traitement d'un milieu gazeux comprenant du monoxyde de carbone et des composés organiques où ledit milieu gazeux est mis en contact avec le catalyseur précité à l'état photoactivé, en présence d'oxygène (généralement présent dans le milieu gazeux à traiter), ce par quoi on obtient une oxydation catalytique efficace à la fois du monoxyde de carbone et des composés organiques. L'invention a en particulier pour objet les procédés de traitement de ce type où le milieu gazeux à traiter est l'air intérieur d'un bâtiment ou d'un véhicule habité.

Différents avantages, caractéristiques, et modes de réalisation préférentiels de réalisation des différents aspects de l'invention vont maintenant être décrits plus en détails.

Le support à base d'oxyde de titane qui est présent dans les compositions catalytiques (C) utilisées selon l'invention comprend de l'oxyde de titane, au moins au niveau de tout ou partie de sa surface. Le support dicte en général la structure de la composition catalytique et lui confère en particulier ses propriétés mécaniques, la présence du métal déposé sur le support ne modifiant généralement pas ces propriétés mécaniques. En général, ce support comprend de l'oxyde de titane à titre de constituant majoritaire (typiquement l'oxyde de titane est présent dans le support à raison d'au moins 60% en masse, voire au moins 80% en masse et préférentiellement au moins 90% en masse par rapport à la masse totale du support). Selon un mode de réalisation particulièrement bien adapté à la mise en oeuvre de l'invention, le support est essentiellement, voire entièrement constitué d'oxyde de titane (présent à raison d'au moins 95% en masse, plus préférentiellement au moins 98%, voire au moins 99%). Alternativement, une composition catalytique utilisée selon l'invention peut également comprendre un dépôt d'oxyde de titane sur un matériau de base, généralement inerte (par exemple un matériau poreux de base capable de jouer le rôle d'un filtre).

L'oxyde de titane présent dans les compositions catalytiques (C) se présente généralement sous la forme anatase et/ou rutile. Selon un mode de réalisation possible il s'agit d'anatase (photoactivable par des rayonnements de type UVA, de longueur d'onde typiquement inférieure à 380 nm), éventuellement en association avec du rutile (le mélange étant alors activable, de façon connue, par les rayonnements UVA précités, ainsi que, dans une moindre mesure, par des rayonnements dans les longueurs d'onde du visible). L'oxyde de titane employé dans les compositions catalytiques (C) est de préférence un mélange comprenant du TiO₂ de forme anatase et du TiO₂ de forme rutile, avec un rapport massique anatase/rutile de préférence compris entre 10 :90 et 90 :10, plus préférentiellement entre 50 : 50 et 85 : 15, ce rapport étant de préférence supérieur à 70 : 30, par exemple de l'ordre de 80 : 20.

De façon plus générale, le support employé selon l'invention peut être choisi parmi les matériaux à base d'oxyde de titane employés à titre de photocatalyseurs dans les dispositifs d'épuration d'air à base de TiO₂ photoactivé actuellement connus.

Quelle que soit sa composition exacte, le support présent dans une composition catalytique utilisée selon l'invention se présente de préférence sous la forme d'un matériau solide ayant une surface spécifique la plus élevée possible, et ce notamment de façon à pouvoir optimiser les échanges avec le flux gazeux à traiter. A cet effet, il est préférable que la surface spécifique BET du support soit supérieure à 5 m²/g, plus préférentiellement supérieure ou égale à 10 m²/g par exemple entre 50 et 500 m²/g.

Le mélange métallique qui est déposé sur le TiO₂ dans un catalyseur utilisé selon l'invention est un mélange comprenant au moins deux métaux, à savoir du platine en association avec du palladium et/ou du nickel. Les inventeurs ont maintenant mis en évidence que la présence de ce dépôt métallique spécifique sur la surface de l'oxyde de titane, conduit, vraisemblablement par des effets électroniques de type métal/semi-conducteur et/ou métal/métal, à une amélioration des propriétés catalytiques de l'oxyde de titane.

A ce sujet, les inventeurs ont mis en évidence que l'amélioration des propriétés obtenues avec le mélange spécifique de métaux employé selon la présente invention (à savoir du Pt associé à Pd et/ou Ni) assure un effet catalytique tout à fait particulier, non décrit à ce jour à la connaissance des inventeurs, et qui n'est pas obtenu en déposant d'autres métaux à la surface de l'oxyde de titane, ce qui rend l'amélioration observée tout à fait inattendue.

En particulier, les inventeurs ont établi qu'un dépôt métallique constitué exclusivement de platine métallique (et donc exempt de Pd ou Ni) sur de l'oxyde de titane ne conduit pas aux propriétés photocatalytiques observée dans le cadre de l'invention. Au contraire, les inventeurs ont notamment montré qu'un catalyseur TiO₂ modifié seulement par du platine présente une efficacité insuffisante pour l'oxydation photocatalytique de polluants organiques, en particulier en présence de monoxyde de carbone.

Par ailleurs, les inventeurs ont montré que, si on remplace le mélange métallique employé selon l'invention par un autre mélange de métaux, on obtient bien souvent une perte drastique de l'activité catalytique. C'est notamment le cas si on effectue un dépôt d'un mélange de platine et d'un métal autre que le palladium ou le nickel. Par exemple, un mélange de platine et de cobalt ou bien un mélange de platine et de fer déposé sur de l'oxyde de titane conduit à un catalyseur qui n'est propre à assurer de façon efficace ni l'oxydation photocatalytique du CO, ni celle de polluants organiques du type des *COVs.*

Le mélange de métaux déposé sur la surface du support d'une composition catalytique (C) utilisée selon l'invention est de préférence présent en une teneur supérieure ou égale à 0,05% en masse, plus préférentiellement supérieure ou égale à 0,1% par rapport à la masse totale de la composition catalytique. Les effets obtenus sur l'amélioration catalytique sont dépendants de cette teneur, mais il ne s'avère généralement pas nécessaire de mettre en oeuvre des teneurs supérieures à 2% en masse pour obtenir des conversions efficaces de CO et de polluants organiques avec les compositions utilisées selon l'invention. Ainsi, la teneur en mélange de métaux déposé sur la surface du support d'une composition catalytique (C) utilisée selon l'invention est le plus souvent comprise entre 0,1% et 2%, avantageusement entre 0,2% et 1%, par exemple entre 0,25% et 0,75% (typiquement de l'ordre de 0,3%) par rapport à la masse totale de la composition catalytique.

Dans le cas le plus général, la proportion de platine présent au sein du mélange de métaux déposé sur la surface du support d'une composition catalytique (C) utilisée selon l'invention, exprimé par le rapport du nombre de mole de platine métallique présent dans le mélange rapporté au nombre de mole de métaux à l'état métallique présent dans le mélange est quant à elle de préférence comprise entre 10 et 90 % en mole, plus préférentiellement entre 30 et 80 %.

Par ailleurs, le mélange de métaux présent sur la surface du support d'une composition catalytique (C) est de préférence un mélange intime des métaux constitutifs du mélange. Selon un mode de réalisation particulièrement intéressant, le mélange de métaux présent dans une composition catalytique (C) utilisée selon l'invention se présente sous la forme d'une multitudes de particules métalliques ("clusters"), déposées sur la surface du support, ayant typiquement des dimensions comprises entre 1 et 50 nm, de préférence entre 1 et 10 nm. Ces particules peuvent comprendre un mélange de plusieurs types de particules ayant des compositions variables en Pt et en Pd et/ou nickel. Par exemple, le mélange de métaux présent sur la surface du support d'une composition catalytique (C) peut comprendre un mélange de particules comprenant des particules constituées de Pt et des particules constituées de Pd ou constituées de Ni, éventuellement en association avec des particules comprenant un mélange de Pd et Pd ou Ni. Alternativement, le mélange de métaux peut comprendre un mélange de particules comprenant chacune les métaux Pd et Pd ou Ni en mélange, la composition pouvant varier d'une particule à une autre ou bien toutes les particules ayant la même composition.

Le dépôt du mélange de métaux sur le support d'une composition catalytique utilisée selon l'invention peut être effectué selon toute technique connue en soi. En particulier, une composition catalytique utilisée selon l'invention peut avantageusement être préparée selon un procédé comprenant les étapes successives suivantes :
(a) mise en contact d'un matériau support comprenant, au moins en surface, de l'oxyde de titane, avec une solution (s) contenant, à l'état solubilisé dans ladite solution (s) :
   - au moins un composé comprenant du platine dans un état d'oxydation supérieur à 0 et
   - en fonction des métaux dont la présence est recherchée dans le catalyseur, au moins un composé comprenant du palladium dans un état d'oxydation supérieur à 0 et/ou au moins un composé comprenant du nickel dans un état d'oxydation supérieur à 0,
   ce par quoi on obtient un dépôt de platine et de palladium et/ou nickel dans un état d'oxydation supérieur à 0 à la surface de l'oxyde de titane du matériau support ; puis
(b) réduction d'au moins une partie du platine et d'au moins une partie du palladium et/ou nickel ainsi déposés en surface de l'oxyde de titane du matériau support, respectivement en platine métallique et en nickel métallique et/ou palladium métallique.

Ce mode de réalisation conduit à la formation, sur la surface du support de la composition catalytique, d'un dépôt métallique constitué de particules à base d'un mélange métallique, qui présentent en général une distribution de taille homogène sur l'ensemble de la surface du support.

De façon générale les composés métalliques solubilisés mis en oeuvre dans l'étape (a) peuvent comprendre des composés contenant les éléments métalliques Pt, Pd ou Ni à un état d'oxydation supérieur à 0, typiquement à l'état d'oxydation +1, +2, +3, ou +4 (typiquement du Pt à l'état d'oxydation +2 ou +4, du Pd à l'état d'oxydation +1, +2 ou +3 ou du Ni à l'état d'oxydation +2 ou +3). La concentration totale en éléments métalliques Pt, Pd et Ni dans la solution (s) est de préférence comprise entre 10⁻⁵ et 10⁻³ mol/L. La concentration en les différents composés mis en oeuvre dans la solution (s) de l'étape (a) est généralement choisie de façon à ce que le pH de la solution (s) soit inférieur (de préférence d'au moins 0,5 et de préférence d'au moins 1 unité de pH) au point isoélectrique de l'oxyde de titane présente en surface du matériau support de l'étape (a).

En général, les composés métalliques solubilisés de l'étape (a) sont des sels ou des complexes métalliques qui comprennent typiquement des cations Pt⁴⁺ et des cations Pd³⁺ et/ou Ni²⁺. De façon préférentielle, il s'agit de sels ou de complexes métalliques qui sont solubles au sein de la solution (s). Selon un mode de réalisation particulièrement préféré, il s'agit de sels ou complexes métalliques hydrosolubles et la solution (s) est une solution aqueuse, ce qui présente l'avantage de pouvoir conduire l'étape (a) dans l'eau à titre d'unique solvant. Cette possibilité constitue encore un avantage des compositions de l'invention, qui se répercute à la fois en terme de respect de l'environnement de facilité de mise en oeuvre et de coûts de production réduits. Il est en outre à noter que l'étape (a) ne nécessite pas la mise en oeuvre de moyens de chauffage ou de mise sous pression (l'étape (a) peut avantageusement être conduite à température ambiante et à pression atmosphérique).

A titre de composés hydrosolubles à base de platine bien adaptés dans l'étape (a), on peut notamment mentionner H₂PtCl₆ ou bien encore PtCl₄, ou Pt(AcAc)₂

Concernant les composés hydrosoluble à base de palladium qu'on peut mettre en oeuvre dans l'étape (a), on peut citer, de façon non limitative, (NH₄)₂PdCl₆ ou bien encore Pd(AcAc)₂, PdCl₂, Pd(OAc)₄, ou le nitrate de palladium, notamment sous sa forme Pd(NO₃)₂.2H₂O.

Par ailleurs, des composés hydrosolubles à base de nickel adaptés pour la mise en oeuvre de l'étape (a) sont, par exemple, le chlorure de nickel NiCl₂, Ni(AcAc)₂, Ni(OAc)₂, ou le nitrate de palladium, notamment sous sa forme Ni(NO₃)₂.6H₂O.

Les composés métalliques mis en oeuvre dans l'étape (a) étant souvent sensibles à la lumière (en particulier H₂PtCl₆ et (NH₄)₂PdCl₆), il se révèle souvent préférable de conduire l'étape (a) à l'abri de la lumière, de façon à inhiber la photoréduction des cations métalliques en métaux lors de cette étape.

Dans l'étape (a), la mise en contact du matériau support avec la solution (s) peut-être effectuée par tout moyen, notamment par imprégnation, trempage ou pulvérisation. Il s'avère généralement préférable, dans l'étape (a), que le temps de contact de la solution (s) avec le matériau support soit le plus élevé possible, notamment de façon à optimiser l'adsorption des cations métalliques platine, palladium et nickel à la surface du TiO₂. Ainsi, l'étape (a) est de préférence conduite en immergeant le matériau support au sein de la solution (s), et en laissant de préférence en contact le matériau support et la solution pendant une durée d'au moins 15 minutes, par exemple entre 30 minutes et 5 heures (typiquement pendant une heure), avantageusement sous agitation. L'agitation est de préférence la plus vigoureuse possible, les inventeurs ayant mis en évidence que la taille des particules métalliques formées sur le support à l'issue de l'étape (b) étant d'autant plus faible que la vitesse d'agitation est élevée.

Dans l'étape (b), les éléments Pt et Pd et/ou Ni, introduits dans l'étape (a) à un état d'oxydation supérieur à 0, sont réduits au moins partiellement (et de préférence le plus complément possible) en Pt et Pd et/ou Ni à l'état d'oxydation 0 (état métallique). Cette réduction de l'étape (b) peut être réalisée selon tout moyen connu en soi propre à former le mélange recherché de platine métallique et de nickel et/ou de palladium métallique à la surface du matériau support.

Selon un mode de réalisation particulièrement avantageux, la réduction de l'étape (b) est effectuée en faisant réagir le support traité dans l'étape (a) avec un réducteur de type hydrure métallique, par exemple NaBH₄, LiAlH(OtBu)₃, SnCl₂ ou H₂C₂O₄, ce réducteur étant de préférence utilisé en large excès (de préférence au moins 1,5 et plus préférentiellement au moins 2 fois la stoechiométrie) par rapport à la quantité de cations métalliques. Ce traitement présente l'avantage de pouvoir être conduit directement sur le milieu obtenu à l'issue de l'étape (a). De plus, comme l'étape (a), l'étape (b) présente l'avantage de pouvoir être conduite en milieu aqueux, sous pression atmosphérique et à température ambiante, ce qui rend le procédé global particulièrement bien adapté à une mise en oeuvre industrielle. La mise en oeuvre de températures plus élevées que la température ambiante n'est cependant pas exclue dans l'étape (b), où la réduction peut être effectuée par réduction thermique ou par photoréduction.

Selon un mode de réalisation particulièrement intéressant, une composition catalytique utilisée selon l'invention est obtenue en mettant en oeuvre les étapes suivantes :
- immersion d'un matériau support comprenant, au moins en surface, de l'oxyde de titane dans une solution aqueuse contenant, à l'état solubilisé (i) des sels ou des complexes hydrosolubles à base de cations platine (Pt⁴⁺ en général); et (ii) des sels ou des complexes hydrosolubles à base de cations palladium (Pd³⁺) et/ou de cations nickel (Ni²⁺), pendant une durée avantageusement supérieure à 15 minutes ; puis
- ajout au milieu obtenu d'un agent réducteur, typiquement un hydrure métallique de type NaBH₄.

Plus généralement, se révèlent particulièrement intéressant les procédés de préparation mettant en oeuvre des étapes (a) et (b) telles que définies ci-dessus et qui suite à la mise en oeuvre des étapes (a) et (b) précitées sont conduites à température ambiante et à pression atmosphérique.

On obtient un catalyseur utilisé selon l'invention, où le support a des propriétés physiques qui sont généralement extrêmement similaires à celle du matériau support employé dans l'étape (a). En effet, le plus souvent, les traitements des étapes (a) et (b) n'affectent pas les propriétés physiques du matériau support, notamment dans la mesure où elles n'impliquent généralement aucune mise sous pression ou traitement thermique.

De ce fait, les étapes (a) et (b) précitées peuvent avantageusement être mises en oeuvre en utilisant à titre de matériau support les photocatalyseurs à base d'oxyde de titane qui sont présents dans les dispositifs d'épuration d'air à base de TiO₂ commerciaux actuellement connus.

Dans ce cadre, la présente invention permet d'améliorer, de façon notable, l'efficacité de ces dispositifs d'épuration de type connus en leur apportant uniquement une modification structurelle très aisée à introduire et avec un coût raisonnable, à savoir le dépôt d'un mélange spécifique de métaux tel que défini ci-dessus sur la surface des catalyseurs TiO₂ présents dans ces dispositifs. Les procédés de préparation de compositions catalytiques selon l'invention à partir d'un photocatalyseur oxyde de titane de ce type sont de préférence exempts de toute étape de mise sous pression ou de traitement thermique.

De façon générale, quelle que soit leur mode de préparation, deux grands type de compositions catalytiques (C) utilisées selon la présente invention peuvent être distingués, en fonction de la nature du mélange de métaux présent sur la surface du support à base d'oxyde de titane, à savoir :
- les compositions comprenant du palladium (Pd) ; et
- les compositions comprenant du nickel (Ni).

Ces deux grands types de compositions présentent généralement des propriétés catalytiques similaires, avec des efficacité variables selon les compositions mais des processus impliqués qui semblent similaires, ce qui est vraisemblablement dû au fait que le palladium et le nickel occupent la même colonne de la classification périodique.

### Compositions catalytiques à base d'un mélange platine/palladium

Selon une première variante de l'invention, le mélange de métaux déposé sur l'oxyde de titane du support d'une composition (C) utilisée selon l'invention comprend un mélange de platine à l'état métallique et de palladium à l'état métallique, à savoir un mélange métallique répondant à la formule générale (I) suivante :

PtₓPd₁₋ₓ (I)

où x est un nombre généralement compris entre 0,1 et 0,9.

Des compositions catalytiques selon cette première variante qui s'avèrent en particulier intéressantes sont celles où x est compris entre 0,2 et 0,8, notamment entre 0,2 et 0,7 par exemple celles où x = 0,2 ; x=0,37.

De préférence, selon cette première variante, le mélange de métaux présent sur l'oxyde de titane du support est constitué par un mélange métallique répondant à la formule (I), à l'exclusion de tout autre métal à l'état métallique.

De préférence, selon ce mode de réalisation, le rapport de la masse du mélange métallique de formule (I) présent sur la catalyseur rapporté à la masse totale du catalyseur est de préférence compris entre 0,1 et 1%, par exemple entre 0,2 et 0,5%, ce rapport étant typiquement de l'ordre de 0,3%.

Le dépôt, sur le support d'une composition utilisée selon l'invention, d'un mélange de métaux répondant à la formule (II) précitée avec une valeur de x donnée est typiquement réalisé en mettant en contact le support avec une solution aqueuse contenant :
- un sel ou un complexe de platine hydrosoluble, typiquement H₂PtCl₆ ; et
- un sel ou un complexe de palladium hydrosoluble, notamment (NH₄)₂PdCl₆,
avec un rapport molaire Pt/Pd dans la solution aqueuse égal à x/(1-x), puis en faisant réagir le support issu de ce traitement avec un composé réducteur propre à convertir les cations platine en platine métallique et les cations palladium en palladium métallique, ce composé réducteur étant typiquement NaBH₄ autrement utilisé en excès stoechiométrique.

Selon ce mode de réalisation, on forme à la surface du support des particules métalliques ayant une taille de l'ordre de 1 à 10 nm et qui comprennent du Pt et du Pd à l'état métallique. Ces particules peuvent notamment être observées sur des clichés obtenus par microscopie électronique à transmission.

De préférence, les compositions catalytiques obtenues dans le cadre de cette première variante sont obtenues en immergeant le matériau support au sein de la solution aqueuse comprenant les sels ou complexes de platine et de palladium, en laissant mûrir le milieu ainsi obtenu pendant au moins 15 minutes (par exemple entre 30 minutes et 2 heures), puis en ajoutant rapidement l'agent réducteur au milieu réactionnel, de préférence sous agitation.

Dans la solution aqueuse comprenant les sels ou complexes de platine et de palladium mise en oeuvre selon cette première variante de l'invention, la concentration en élément platine est de préférence comprise entre 10⁻⁵ et 10⁻³ mol/L. La concentration en élément palladium est, elle aussi, avantageusement comprise entre 10⁻⁵ et 10⁻³ mol/L. La solution aqueuse comprenant les sels a de préférence un pH de 3 à 5.

Les compositions catalytique selon cette première variante peuvent éventuellement comprendre, en plus du mélange de métaux de formule (I), d'autres composés en surface, par exemple des sels métalliques ou des complexes de Pt ou Pd n'ayant pas été réduits lors de l'étape de réduction.

### Compositions catalytiques à base d'un mélange platine/nickel

Selon une deuxième variante de l'invention, le mélange de métaux qui est déposé sur l'oxyde de titane du support d'une composition (C) utilisée selon l'nvention comprend un mélange de platine à l'état métallique et de nickel à l'état métallique, à savoir un mélange métallique répondant à la formule générale (II) suivante :

Pt_{y}Ni_{1-y} (II)

où y est un nombre généralement compris entre 0,1 et 0,9.

Les catalyseurs selon cette variante s'avèrent intéressants notamment compte tenu du coût relativement réduit du nickel.

Des compositions catalytiques selon cette deuxième variante qui s'avèrent en particulier intéressantes sont celles où y est supérieur à 0,2, par exemple entre 0,3 et 0,8, en particulier celles où y = 0,23 ; ou y=0,55.

De préférence, selon cette deuxième variante, le mélange de métaux présent sur l'oxyde de titane du support est constitué par un mélange métallique répondant à la formule (II) à l'exclusion de tout autre métal à l'état métallique.

De préférence, selon ce mode de réalisation, le rapport de la masse du mélange métallique de formule (II) présent sur la catalyseur rapporté à la masse totale du catalyseur est, de préférence, compris entre 0,1 et 1%, par exemple entre 0,2 et 0,5%, ce rapport étant typiquement de l'ordre de 0,3%.

Le dépôt, sur le support d'une composition selon l'invention, d'un mélange de métaux répondant à la formule (II) précitée avec une valeur de y donnée est typiquement réalisé en mettant en contact le support avec une solution aqueuse contenant :
- un sel ou un complexe de platine hydrosoluble, typiquement H₂PtCl₆ ; et
- un sel ou un complexe de nickel hydrosoluble, généralement un sel tel que NiCl₂,
avec un rapport molaire Pt/Ni dans la solution aqueuse égal à y/(1-y), puis en faisant réagir le matériau support issu de ce traitement avec un composé réducteur propre à convertir les cations platine en platine métallique et les cations palladium en palladium métallique (typiquement NaBH₄ utilisé de préférence en excès stoechiométrique)

Selon ce mode de réalisation, on forme, à la surface du support, des particules métalliques ayant une taille de l'ordre de 1 à 10 nm et qui comprennent du Pt et du Ni à l'état métallique. Ces particules peuvent, là aussi, être mise en évidence par microscopie électronique à transmission.

De préférence, les compositions catalytiques obtenues dans le cadre de la deuxième variante sont obtenues en immergeant le matériau support au sein de la solution aqueuse comprenant les sels ou complexes de platine et de nickel, en laissant mûrir le milieu ainsi obtenu pendant au moins 15 minutes (par exemple entre 30 minutes et 2 heures), puis en ajoutant rapidement l'agent réducteur au milieu réactionnel, de préférence sous agitation.

Dans la solution aqueuse comprenant les sels ou complexes de platine et de nickel mise en oeuvre selon la deuxième variante de l'invention, la concentration en élément platine est de préférence comprise entre 10⁻⁵ et 10⁻³ mol/L, la concentration en élément nickel étant, elle, avantageusement comprise entre 10⁻⁵ et 10⁻³ mol/L. La solution aqueuse comprenant les sels a de préférence un pH de 3 à 5.

Les compositions catalytiques utilisées selon la deuxième variante de l'invention peuvent éventuellement comprendre, en plus du mélange de métaux de formule (II), d'autres composés en surface, par exemple des sels métalliques ou des complexes de Pt ou Ni n'ayant pas été réduits lors de l'étape de réduction.

Les compositions catalytiques utilisées selon l'invention en particulier celles des deux variantes préférentielles qui viennent d'être décrites, se révèlent des catalyseurs de choix pour réaliser l'oxydation photocatalytique du CO et de composés organiques volatils, en particulier dans les milieux gazeux comprenant ces deux types de polluants, et ce à température ambiante et en présence ou non d'humidité. Les compositions catalytiques utilisées selon l'invention se révèlent de ce fait adaptés à l'élimination du CO et des composés organiques volatils dans la plupart des effluents gazeux, en particulier dans l'air intérieur de milieux confinés. Les compositions utilisées selon l'invention permettent une oxydation photocatalytique efficace de la plupart des composés organiques volatils, en particulier des composés non aromatiques tels que l'acétone, la méthyléthycétone, les alcools, les aldéhydes, les acides carboxyliques, les hydrocarbures, saturés ou non, ainsi que les composés soufrés ou azotés non aromatiques.

Comme indiqué plus haut dans la présente description, les compositions utilisées selon l'invention peuvent être employées en replacement des catalyseurs oxyde de titane non dopés employés aujourd'hui dans les dispositifs commerciaux d'épuration d'air par voie catalytique, les catalyseurs pouvant être employés dans ces dispositifs en remplacement des catalyseur actuels, sans avoir à adapter plus avant la structure de ces dispositifs.

Plus généralement, les compositions catalytiques utilisées selon l'invention peuvent être employées dans tout dispositif de traitement photocatalytique d'un flux gazeux comprenant du CO et/ou des composés organiques volatils. Dans ces dispositifs, la composition catalytique est généralement associée à des moyens d'irradiation propres à l'activer, typiquement une source de rayonnement électromagnétique comprenant une longueur d'onde inférieure ou égale à 380 nm (et/ou une source de lumière visible dans le cas où la composition catalytique comprend de l'oxyde de titane sous forme rutile), et à des moyens de mise en contact du flux gazeux à traiter avec le catalyseur ainsi photoactivé.

Dans ce type de dispositif, la composition catalytique utilisée selon l'invention peut, par exemple, être déposée à titre de revêtement interne sur tout ou partie d'une canalisation permettant de véhiculer le flux gazeux à traiter au sein du dispositif.

Selon un mode de réalisation intéressant, la composition catalytique utilisée selon l'invention peut être déposée sur un filtre, le filtre ainsi modifié étant alors propre à assurer un traitement particulièrement complet d'un flux gazeux, par exemple l'air intérieur d'un environnement confiné. Un tel filtre permet en effet de traiter en continu un flux gazeux en retenant les fines particules, (poussières, microorganismes, pollen...) présentes au sein de ce flux (effet du filtre) et en éliminant conjointement le CO et/ou les polluants organiques présents dans le flux gazeux (effets dus au photocatalyseur).

La présente invention et ses avantages seront encore davantage illustrés par les exemples ci-après, où des compositions catalytiques utilisées selon l'invention ont été préparées et testées. Ces compositions ont toutes été préparées à partir d'un oxyde de titane pulvérulent commercial, à savoir le TiO2 P25 commercialisé par la société Evonik (20% de phase rutile - 80% de phase anatase ; surface spécifique d'environ 50 m²/g).

### Exemple 1

### Composition catalytique C1 : (Pd_{0,63}Pt_{0,37}) à 0,3% en masse sur TiO2

A température ambiante (20°C) et à pression atmosphérique (10⁵ Pa), 2 g du support oxyde de titane précité ont été immergés dans 200 mL d'une solution aqueuse comprenant, à l'état solubilisé, 8,26 mg de H2PtCl₆ et 9,64 mg de (NH₄)₂PdCl₆ (rapport molaire Pd/Pt de 0,63 : 0,37 - rapport massique (Pd+Pt)/TiO₂ de 0,3% en masse).

Le milieu ainsi obtenu a été laissé sous agitation durant une heure, à l'abri de la lumière, de façon à permettre aux complexes métalliques de s'adsorber sur la surface du support, sans conduire à une photoréduction précoce des cations métalliques.

On a ensuite introduit, en une seule fois, 10 mg de NaBH₄ dans le milieu, maintenu sous agitation, et on a laissé réagir pendant 15 minutes de façon à laisser s'opérer la réduction des cations en métaux.

On a ainsi obtenu la formation d'un mélange métallique de formule globale Pd_{0,63}Pt_{0,37} sur la surface du support d'oxyde de titane,sous la forme de particules de dimensions de l'ordre de 1 à 10 nm, observables par microscopie électronique à transmission.

La suspension obtenue a été filtrée, le filtrat éliminé et le support modifié a été séché, ce par quoi on a obtenu la composition catalytique C1 sous la forme de 2 g d'une poudre utilisable en l'état à titre de photocatalyseur selon l'invention.

### Exemple 2

### Composition catalytique C2 : (Pd_{0,8}Pt_{0,2}) à 0,3% en masse sur TiO2

Le protocole de l'exemple 1 a été reproduit à la différence que dans la première étape, 2 g du support oxyde de titane précité ont été immergés dans 200 mL d'une solution aqueuse comprenant, à l'état solubilisé, 5,01 mg de H2PtCl₆ et 13,73 mg de (NH₄)₂PdCl₆ (rapport molaire Pd/Pt de 0,8 : 0,2).

A l'issue de ce procédé, on a obtenu 2 g de composition catalytique C2 sous forme de poudre.

### Exemple 3

### Composition catalytique C3 : (Ni_{0,45}Pt_{0,55}) à 0,3% en masse sur TiO2

A température ambiante (20°C) et à pression atmosphérique (10⁵ Pa), 2 g du support oxyde de titane précité ont été immergés dans 200 mL d'une solution aqueuse comprenant, à l'état solubilisé, 12,8 mg de H₂PtCl₆ et 2,8 mg de NiCl₂ (rapport molaire Ni/Pt de 0,45 : 0,55 - rapport massique (Ni+Pt)/TiO₂ de 0,3% en masse).

Le milieu ainsi obtenu a été laissé sous agitation durant une heure, à l'abri de la lumière.

On a ensuite introduit, en une seule fois, 10 g de NaBH₄ dans le milieu, maintenu sous agitation, et on a laissé réagir pendant 15 minutes de façon à laisser s'opérer la réduction des cations en métaux, conduisant à la formation de particules bimétalliques de Ni_{0,45}Pt_{0,55} sur la surface du support d'oxyde de titane.

La suspension obtenue a été filtrée, le filtrat éliminé et le support modifié a été séché, ce par quoi on a obtenu la composition catalytique C3 sous la forme de 2 g d'une poudre utilisable en l'état à titre de photocatalyseur selon l'invention.

### Exemple 4

### Composition catalytique C4 : (Ni_{0,77}Pt₀,₂₃) à 0,3% en masse sur TiO₂

Le protocole de l'exemple 4 a été reproduit à la différence que dans la première étape, 2 g du support oxyde de titane précité ont été immergés dans 200 mL d'une solution aqueuse comprenant, à l'état solubilisé, 7,9 mg de H₂PtCl₆ et 6,6 mg de NiCl₂ (rapport molaire Ni/Pt de 0,77 : 0,23).

A l'issue de ce procédé, on a obtenu 2 g de composition catalytique C4 sous forme de poudre.

### Exemple 5

### Oxydation photocatalytique du monoxyde de carbone

Les compositions C1, C2, C3 et C4 des exemples ci-dessus ont été mises en oeuvre pour réaliser l'oxydation photocatalytique d'un flux gazeux constitué d'air additionné de 250 ppm de monoxyde de carbone (concentration en CO choisie volontairement très élevée et bien au dessus du seuil létal du monoxyde de carbone).

L'oxydation photocatalytique a été réalisée dans chaque cas dans un réacteur annulaire tubulaire de longueur égale à 26 cm et de diamètre interne égal à 3 cm. Sur les parois internes de ce réacteur, 110 mg de la composition catalytique considérée (C1, C2, C3 ou C4 respectivement) a été déposé (taux de recouvrement de la paroi interne du réacteur : 0,125 g/cm²). Pour ce faire, la composition a été dispersée dans de l'éthanol et la dispersion a été appliquée sur la paroi interne du catalyseur, puis séchée. L'oxydation catalytique du flux gazeux a été opérée en introduisant le flux dans le réacteur à un débit de 200 mL/minute tout en irradiant l'ensemble de la composition catalytique localisée à l'intérieur du réacteur à l'aide d'une lampe UVA (380 nm - 8W) localisée à l'intérieur du réacteur.

Dans chaque cas, la réaction a été reproduite dans les mêmes conditions, mais en ajoutant de l'eau au sein du milieu gazeux traité (40% d'humidité relative (HR) dans ce cas, contre 0% dans le premier cas)

A titre de comparaison, on a par ailleurs réalisé la réaction toujours dans les mêmes conditions, mais avec un support de TiO₂ P25 (non modifié) à titre de photocatalyseur.

Les résultats obtenus sont reportés dans le tableau 1 ci-dessous, qui met en évidence la supériorité indéniable des catalyseurs de l'invention par rapport u TiO2 du type employé dans les dispositifs d'épuration d'air actuels. En effet, la conversion du CO est de 30% avec une humidité relative (HR) de 0%, et est quasiment inexistante à 40% d'humidité relative), les catalyseurs de l'invention permettent d'atteindre un taux de conversion beaucoup plus élevé, y compris en présence d'humidité.

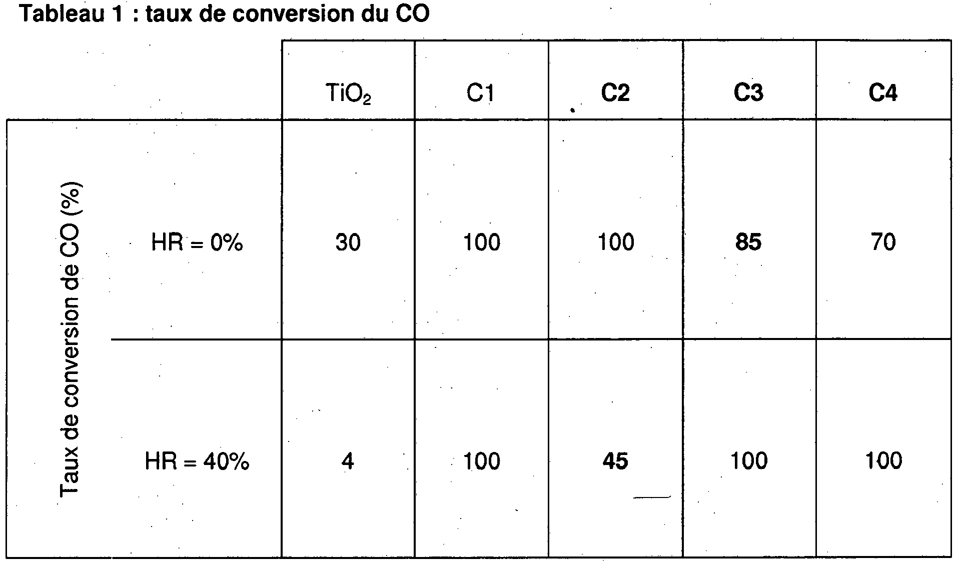

### Exemple 6

### Oxydation photocatalytique du monoxyde de carbone

Les compositions C1, C2, C3 et C4 des exemples 1 à 4 ont été mises en oeuvre pour réaliser l'élimination au sein d'un flux gazeux de deux types de polluants présents conjointement, à savoir du CO et de l'acétone (composé organique représentatif des *COVs* présents dans des environnements confinés rééls).

Le flux gazeux traité est un courant d'air comprenant 250 ppm de CO et 1500 ppm d'acétone, qui a été traité par oxydation photocatalytique dans les mêmes conditions que dans l'exemple 5 avec ou sans humidité.

A titre de comparaison, on a réalisé la même réaction avec le support de TiO₂ P25 (non modifié) à titre de photocatalyseur.

Les résultats obtenus sont reportés dans le tableau 2 ci-dessous, qui fait clairement apparaître la supériorité des catalyseurs selon la présente invention concernant la conversion du CO en présence de *COVs.*

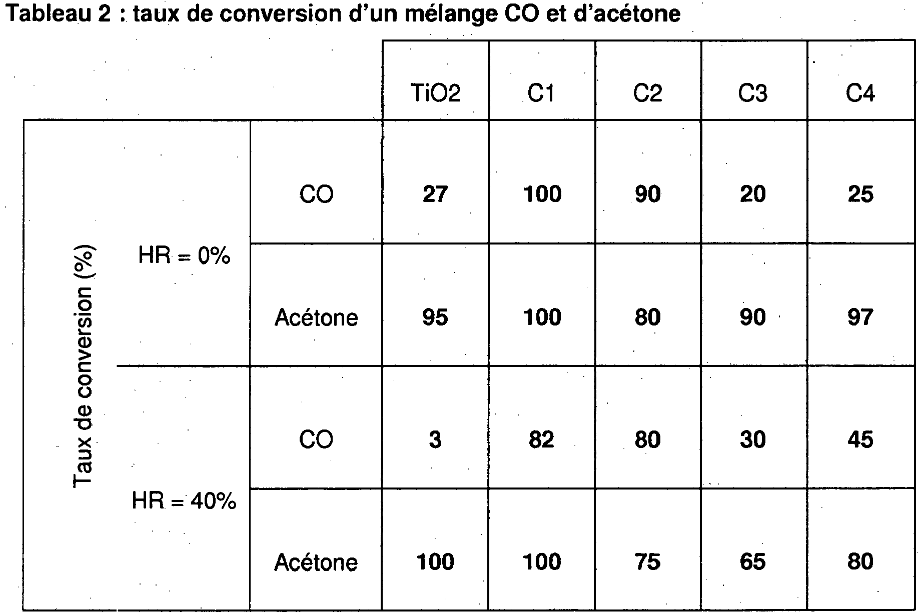

## Revendications

1. Utilisation d'une composition catalytique comprenant :
- un support comprenant, au moins en surface, de l'oxyde de titane ; et
- déposé sur l'oxyde de titane présent sur la surface du support, un mélange métallique contenant :
- du platine, au moins en partie à l'état métallique ; et
- du palladium et/ou du nickel, au moins en partie à l'état métallique pour réaliser une oxydation photocatalytique de monoxyde de carbone contenu dans un milieu gazeux.

2. Utilisation selon la revendication 1, où le mélange métallique déposé sur la surface du support est présent en une teneur comprise entre 0,1 et 2% par rapport à la masse totale de la composition catalytique.

3. Utilisation selon la revendication 1 ou 2, où le mélange métallique déposé sur la surface du support se présente sous la forme d'une multitude de particules métalliques.

4. Utilisation selon l'une des revendications 1 à 3, d'une composition qui est susceptible d'être obtenue selon un procédé comprenant les étapes successives suivantes :
(a) mise en contact d'un matériau support comprenant, au moins en surface, de l'oxyde de titane, avec une solution(s) contenant, à l'état solubilisé dans ladite solution(s) :
- au moins un composé comprenant du platine dans un état d'oxydation supérieur à 0 et
- au moins un composé comprenant du palladium dans un état d'oxydation supérieur à 0 et/ou au moins un composé comprenant du nickel dans un état d'oxydation supérieur à 0,
ce par quoi on obtient un dépôt du platine et du palladium et/ou nickel dans un état d'oxydation supérieur à 0 à la surface de l'oxyde de titane du matériau support ;
puis
(b) réduction d'au moins une partie du platine et d'au moins une partie du palladium et/ou nickel ainsi déposés en surface de l'oxyde de titane du matériau support, respectivement en platine métallique et en nickel métallique et/ou palladium métallique.

5. Utilisation selon l'une des revendications 1 à 4, où le mélange métallique déposé sur la surface du support comprend un mélange de platine métallique et de palladium à l'état métallique, répondant à la formule générale (I) suivante :
PtₓPd₁₋ₓ (I)
où x est un nombre compris entre 0,1 et 0,9.

6. Utilisation selon la revendication 5, où le mélange métallique de formule (I) est déposé sur le support en mettant en contact le support avec une solution aqueuse contenant :
- un sel ou un complexe de platine hydrosoluble ; et
- un sel ou un complexe de palladium hydrosoluble,
avec un rapport molaire Pt/Pd dans la solution aqueuse égal à x/(1-x),
puis en faisant réagir le support issu de ce traitement avec un composé réducteur propre à convertir les cations platine en platine métallique et les cations palladium en palladium métallique.

7. Utilisation selon l'une des revendications 1 à 4, où le mélange métallique déposé sur la surface du support comprend un mélange de platine métallique et de nickel à l'état métallique, répondant à la formule générale (II) suivante :
Pt_{y}Ni_{1-y} (II)
où y est un nombre généralement compris entre 0,1 et 0,9.

8. Utilisation selon la revendication 7, où le mélange métallique de formule (II) est déposé sur le support en mettant en contact le support avec une solution aqueuse contenant :
- un sel ou un complexe de platine hydrosoluble ; et
- un sel ou un complexe de palladium hydrosoluble,
avec un rapport molaire Pt/Ni dans la solution aqueuse égal à y/(1-y),
puis en faisant réagir le support issu de ce traitement avec un composé réducteur propre à convertir les cations platine en platine métallique et les cations nickel en nickel métallique.

9. Utilisation selon la revendication 4, où les composés solubles employés dans l'étape (a) sont des sels ou des complexes métalliques hydrosolubles comprenant des cations Pt⁴⁺ et des cations Pd³⁺ et/ou Ni²⁺, et où la solution (s) est une solution aqueuse.

10. Utilisation selon la revendication 9, où dans l'étape (a), le sel ou complexe de platine hydrosoluble est H₂PtCl₆, PtCl₄, ou Pt(AcAc)₂ ; le sel ou complexe de palladium hydrosoluble est (NH₄)₂PdCl₆, Pd(AcAc)₂, PdCl₂, Pd(OAc)₄, ou Pd(NO₃)₂.2H₂O ; et le sel ou complexe de nickel est NiCl₂ Ni(AcAc)₂, Ni(OAc)₂, ou Ni(NO₃)₂.6H₂0.

11. Utilisation selon l'une des revendications 1 à 4, où le mélange métallique déposé sur la surface du support comprend :
- un mélange de platine métallique et de palladium à l'état métallique répondant à la formule (I)
PtₓPd₁₋ₓ (I)
où x est un nombre compris entre 0,1 et 0,7 ; ou
- un mélange de platine métallique et de nickel à l'état métalliques répondant à la formule (II) suivante :
Pt_{y}Ni_{1-y} (II)
où y est un nombre compris entre 0,1 et 0,9.

12. Procédé de traitement d'un milieu gazeux comprenant du monoxyde de carbone et des composés organiques, où ledit milieu gazeux est mis en contact avec un catalyseur selon l'une des revendications 1 à 8 et 11 à l'état photoactivé, en présence d'oxygène, ce par quoi on obtient une oxydation catalytique efficace à la fois du monoxyde de carbone et des composés organiques.

13. Procédé selon la revendication 12 où le milieu gazeux traité est l'air intérieur d'un bâtiment ou d'un véhicule habité.

## Patentansprüche

1. Verwendung einer Katalysatorzusammensetzung, aufweisend:
- einen Träger, der zumindest an der Oberfläche Titanoxid aufweist, und,
- abgeschieden auf das Titanoxid, das sich auf der Oberfläche des Trägers befindet, eine metallische Mischung, die aufweist:
- Platin, das zumindest teilweise in metallischem Zustand ist, und
- Palladium und/oder Nickel, das zumindest teilweise in metallischem Zustand ist, um eine photokatalytische Oxidation von in einem gasförmigen Milieu enthaltenem Kohlenstoffmonoxid zu realisieren.

2. Verwendung gemäß Anspruch 1, wobei die auf die Oberfläche des Trägers abgeschiedene metallische Mischung mit einem Gehalt von zwischen 0,1% und 2% bezüglich der Gesamtmasse der Katalysatorzusammensetzung vorliegt.

3. Verwendung gemäß Anspruch 1 oder 2, wobei die auf die Oberfläche des Trägers abgeschiedene metallische Mischung in Form einer Vielzahl von metallischen Partikeln vorgesehen ist.

4. Verwendung gemäß einem der Ansprüche 1 bis 3, einer Zusammensetzung, die geeignet ist, gemäß einem Verfahren erhalten zu werden, das die folgenden aufeinanderfolgenden Schritte aufweist:
(a) in-Kontakt-Bringen eines Trägermaterials, das zumindest an der Oberfläche Titanoxid aufweist, mit einer Lösung (s), die im gelösten Zustand in der Lösung (s) aufweist:
- mindestens eine Verbindung, die Platin in einem Oxidationszustand von größer als 0 aufweist, und
- mindestens eine Verbindung, die Palladium in einem Oxidationszustand von größer als 0 aufweist, und/oder mindestens eine Verbindung, die Nickel in einem Oxidationszustand von größer als 0 aufweist,
wodurch ein Abscheiden von Platin und von Palladium und/oder Nickel in einem Oxidationszustand von größer als 0 auf die Oberfläche des Titanoxids des Trägermaterials erhalten wird,
anschließend
(b) Reduzieren von zumindest einem Teil des Platins und von zumindest einem Teil des Palladiums und/oder des Nickels, die auf diese Weise auf die Oberfläche des Titanoxids des Trägermaterials abgeschieden wurden, jeweils zu metallischem Platin und zu metallischem Nickel und/oder metallischem Palladium.

5. Verwendung gemäß einem der Ansprüche 1 bis 4, wobei die auf die Oberfläche des Trägers abgeschiedene metallische Mischung eine Mischung aus metallischem Platin und aus Palladium im metallischen Zustand entsprechend der folgenden allgemeinen Formel (I) aufweist:
PtₓPd_{1-X} (I),
wobei x eine Zahl zwischen 0,1 und 0,9 ist.

6. Verwendung gemäß Anspruch 5, wobei die metallische Mischung der Formel (I) auf den Träger abgeschieden wird, indem der Träger mit einer wässrigen Lösung in Kontakt gebracht wird, die aufweist:
- ein wasserlösliches Platinsalz oder einen wasserlöslichen Platinkomplex, und
- ein wasserlösliches Palladiumsalz oder einen wasserlöslichen Palladiumkomplex,
mit einem Pt/Pd-Molverhältnis in der wässrigen Lösung von gleich x/(1-x),
wobei anschließend der aus dieser Behandlung hervorgegangene Träger mit einer Reduktionsverbindung umgesetzt wird, die geeignet ist, die Platinkationen in metallisches Platin und die Palladiumkationen in metallisches Palladium umzuwandeln.

7. Verwendung gemäß einem der Ansprüche 1 bis 4, wobei die auf die Oberfläche des Trägers abgeschiedene metallische Mischung eine Mischung aus metallischem Platin und aus Nickel im metallischen Zustand entsprechend der folgenden allgemeinen Formel (II) aufweist:
Pt_{y}Ni_{1-y} (II),
wobei y eine Zahl ist, die im Wesentlichen zwischen 0,1 und 0,9 liegt.

8. Verwendung gemäß Anspruch 7, wobei die metallische Mischung der Formel (II) auf den Träger abgeschieden wird, indem der Träger mit einer wässrigen Lösung in Kontakt gebracht wird, die aufweist:
- ein wasserlösliches Platinsalz oder einen wasserlöslichen Platinkomplex, und
- ein wasserlösliches Palladiumsalz oder einen wasserlöslichen Palladiumkomplex,
mit einem Pt/Ni-Molverhältnis in der wässrigen Lösung von gleich y/(1-y),
wobei anschließend der aus dieser Behandlung hervorgegangene Träger mit einer Reduktionsverbindung umgesetzt wird, die geeignet ist, die Platinkationen in metallisches Platin und die Nickelkationen in metallisches Nickel umzuwandeln.

9. Verwendung gemäß Anspruch 4, wobei die in Schritt (a) eingesetzten löslichen Verbindungen wasserlösliche Metallsalze oder wasserlösliche Metallkomplexe sind, die Pt⁴⁺-Kationen und Pd³⁺- und/oder Ni2⁺-Kationen aufweisen, und wobei die Lösung (s) eine wässrige Lösung ist.

10. Verwendung gemäß Anspruch 9, wobei in Schritt (a) das wasserlösliche Platinsalz oder der wasserlösliche Platinkomplex H₂PtCl₆, PtCl₄ oder Pt(AcAc)₂ ist, das wasserlösliche Palladiumsalz oder der wasserlösliche Palladiumkomplex (NH₄)₂PdCl₆, Pd(AcAc)₂, PdCl₂, Pd(OAc)₄ oder Pd(NO₃)₂.2H₂O ist, und das Nickelsalz oder der Nickelkomplex NiCl₂Ni(AcAc)₂, Ni(OAc)₂ oder Ni(NO₃)₂.6H₂O ist.

11. Verwendung gemäß einem der Ansprüche 1 bis 4, wobei die auf die Oberfläche des Trägers abgeschiedene metallische Mischung aufweist:
- eine Mischung aus metallischem Platin und aus Palladium im metallischen Zustand entsprechend der folgenden Formel (I):
PtₓPd₁₋ₓ (I)
wobei x eine Zahl zwischen 0,1 und 0,7 ist, oder
- eine Mischung aus metallischem Platin und aus Nickel im metallischen Zustand entsprechend der folgenden Formel (II):
Pt_{y}N_{1-y} (II),
wobei y eine Zahl zwischen 0,1 und 0,9 ist.

12. Verfahren zum Behandeln eines gasförmigen Milieus, das Kohlenstoffmonoxid und organische Verbindungen aufweist, wobei das gasförmige Milieu mit einem Katalysator gemäß einem der Ansprüche 1 bis 8 und 11 im photoaktivierten Zustand in Anwesenheit von Sauerstoff in Kontakt gebracht wird, wodurch eine wirkungsvolle katalytische Oxidation gleichzeitig des Kohlenstoffmonoxids und der organischen Verbindungen erhalten wird.

13. Verfahren gemäß Anspruch 12, wobei das behandelte gasförmige Milieu die Innenraumluft eines Gebäudes oder eines bemannten Fahrzeugs ist.

## Claims

1. Use of a catalytic composition comprising:
- a substrate comprising at least at the surface thereof, titanium oxide; and
- deposited on the titanium oxide present on the surface of the substrate, a metal mixture containing:
- platinum, at least partly in the metal state; and
- palladium and/or nickel, at least partly in the metal state in order to achieve photocatalytic oxidation of carbon monoxide contained in a gaseous medium.

2. The use according to claim 1, wherein the metal mixture deposited on the surface of the substrate, in the composition, is present in a content comprised between 0.1 and 2% based on the total mass of the catalytic composition.

3. The use according to anyone of claim 1 or 2, wherein the metal mixture deposited on the surface of the substrate, in the composition, appears as a multitude of metal particles.

4. The use according to anyone of claim 1 to 3, wherein the composition may be obtained according to a method comprising the following successive steps:
(a) putting a supporting material comprising at least at the surface thereof, titanium oxide, in contact with a solution (s) containing in the solubilized state, in said solution (s):
- at least one compound comprising platinum in an oxidation state greater than 0 and
- at least one compound comprising palladium in an oxidation state greater than 0 and/or at least one compound comprising nickel in an oxidation state greater than 0, whereby a deposit of platinum and of palladium and/or nickel in an oxidation state greater than 0 is obtained at the surface of the titanium oxide of the supporting material; and then
(b) reducing at least one portion of the platinum and at least one portion of the palladium and/or nickel thereby deposited at the surface of the titanium oxide of the supporting material, into platinum metal and nickel metal and/or palladium metal, respectively.

5. The use according to anyone of claim 1 to 4, wherein the metal mixture deposited on the surface of the substrate, comprises a mixture of platinum metal and of palladium in the metal state, fitting the following general formula (I):
PtₓN₁₋ₓ (I)
wherein x is a number comprised between 0.1 and 0.9.

6. The use according to claim 5, wherein the metal mixture of formula (I), in the composition, is deposited on the substrate by putting the substrate in contact with an aqueous solution containing:
- a water-soluble platinum salt or complex; and
- a water-soluble palladium salt or complex,
with a Pt/Pd molar ratio in the aqueous solution equal to x/(1-x),
and then by reacting the substrate stemming from this treatment with a reducing compound able to convert the platinum cations into platinum metal and the palladium cations into palladium metal.

7. The use according to anyone of claim 1 to 4, wherein the metal mixture deposited on the surface of the substrate, comprises a mixture of platinum metal and of nickel in the metal state, fitting the following general formula (II):
Pt_{y}Ni_{1-y} (II)
wherein y is a number generally comprised between 0.1 and 0.9.

8. The use according to claim 7, wherein the metal mixture of formula (II), is deposited on the substrate by putting the substrate into contact with an aqueous solution containing:
- a water-soluble platinum salt or complex; and
- a water-soluble nickel salt or complex,
with a Pt/Ni molar ratio in the aqueous solution equal to y/(1-y),
and then by reacting the substrate stemming from this treatment with a reducing compound able to convert the platinum cations into platinum metal and the nickel cations into nickel metal.

9. The use according to claim 4, wherein the soluble compounds used in step (a) are water-soluble metal salts or complexes comprising Pt⁴⁺ cations and Pd³⁺ and/or Ni²⁺ cations, and wherein the solution (s) is an aqueous solution.

10. The use according to claim 9, wherein in step (a) the water-soluble platinum salt or complex is H₂PtCl₆, PtCl₄, or Pt(AcAc)₂; the water-soluble palladium salt or complex is (NH₄)₂PdCl₆, Pd(AcAc)₂, PdCl₂, Pd(OAc)₄, or Pd(NO₃)₂.2H₂O; and the nickel salt or complex is NiCl₂ Ni(AcAc)₂, Ni(OAc)₂, or Ni(NO₃)₂.6H₂O.

11. The use according to anyone of claims 1 to 4, wherein the metallic mixture deposited on the surface of the substrate, comprises:
- a mixture of platinum metal and of palladium in the metal state, fitting the following general formula (I):
PtₓN₁₋ₓ (I)
wherein x is a number comprised between 0.1 and 0.7; or
- a mixture of platinum metal and of nickel in the metal state, fitting the following general formula (II):
Pt_{y}Ni_{1-y} (II)
wherein y is a number generally comprised between 0.1 and 0.9.

12. Process for treating a gaseous medium comprising carbon monoxide and organic compounds, wherein said gaseous medium is put into contact with a catalyst according to anyone of claims 1 to 8 and 11 in the photoactivated state, in presence of oxygen, whereby efficient catalytic oxidation is obtained both of carbon monoxide and of the organic compounds.

13. Process according to claim 12, wherein the treated gaseous medium is the indoor air of uninhabited building or vehicle.
